# EUROPEAN PATENT SPECIFICATION

(11) **EP 2 275 333 B1**
(45) Date of publication and mention of the grant of the patent: **20.08.2014**
(21) Application number: 10168836.4
(22) Date of filing: 08.07.2010
(51) Int. Cl.: B62K 11/10, B62K 25/28

(54) **Suspension device for a swing-type power unit**
Aufhängevorrichtung für eine Schwenkantriebseinheit
Dispositif de suspension pour une unité d'alimentation de type pivotant

(30) Priority: 14.07.2009 JP 2009165998
(43) Date of publication of application: 19.01.2011
(73) Proprietor: Honda Motor Co., Ltd., Tokyo 107-8556 (JP)
(72) Inventor: Nakanishi, Takafumi, Saitama 351-0193 (JP); Hasegawa, Masakazu, Saitama 351-0193 (JP)
(74) Representative: Ilgart, Jean-Christophe

(56) References cited:
- EP-A1- 1 584 549
- EP-A1- 1 939 083
- JP-A- 59 045 279
- JP-A- 2007 091 204

## Description

### TECHNICAL FIELD

The present invention relates to an improvement in a suspension device for a swing type power unit.

### PRIOR ART

There is known a traditional suspension device for a swing type power unit in which the power unit is connected to a body frame via a link mechanism (see e.g. Patent Document 1 Japanese Patent Laid-Open No. 2007-91204 which discloses a suspension device for a swing-type power unit according to the preamble of claims 1 and 2, JP-A-59.045279, EP-A-1.584.549 and EP-A-1.939.083).

In Fig. 6 of Patent Document 1, a power unit 56 is mounted to a body frame by means of a link mechanism 55 composed of a first link 81, a second link 82 and a connecting rod 84 so as to be movable back and forth and up and down.

The forward, backward, upward and downward vibrations of the power unit 56 are absorbed by rubber bushes installed between the connecting rod 84 and the power unit 56.

On the other hand, vehicles may cause not only the forward, backward, upward and downward vibrations but also leftward and rightward vibrations of the power unit 56 depending on the situations of road surfaces. Therefore, it has been intended by increasing the left-right support width of the power unit 56 to absorb the vehicle-widthwise vibrations of the power unit 56.

### SUMMARY OF THE INVENTION

### PROBLEM TO BE SOLVED BY THE INVENTION

If the vehicle-widthwise support width of the power unit 56 is increased, the support portions on the side of the power unit 56 and the link mechanism 55 tend to enlarge in the vehicle-width direction.

It is an object of the present invention to provide a suspension device for a swing type power unit that can absorb not only the upward, downward, forward and backward vibrations but also vehicle-widthwise vibrations of a power unit and can be downsized along with a link mechanism.

### MEANS FOR SOLVING THE PROBLEM

In accordance with the present invention there is provided a suspension device for a swing-type power unit as set out in independent claims 1 and 2.

A preferred embodiment of the present invention is laid down in the appended dependent claim 3.

### EFFECT OF THE INVENTION

In the invention, the body-side to-be-supported portion provided on the link mechanism to allow the body frame to support the link mechanism is elastically supported and the elastic member is attached to the link mechanism in such a manner as to be able to come into vehicle-widthwise contact with the body frame. Therefore, the elastic member can absorb the vehicle-widthwise vibrations of the power unit in addition to the back and forth directional and up and down directional vibrations.

Since only the elastic member is attached to the link mechanism, the link mechanism can be downsized and thus the suspension device for the swing type power unit can be downsized.

In the invention , the link mechanism includes the first link extending up and down and swingably mounted at one end to the body frame; the second link extending back and forth, and having one end swingably connected to the other end of the first link and the other end supporting the power unit; and the forged connecting rod having one end supported by the body frame and the other end supporting the power unit; and the elastic member is attached to the connecting rod. Since the forged connecting rod is provided with an attachment portion adapted to attach the elastic member thereto, the attachment portion can easily be formed in a forging process compared with provision of the attachment portion on other materials. Thus, cost reduction can be achieved.

In the invention, the link mechanism includes the first link extending up and down and swingably mounted at one end to the body frame; the second link extending back and forth, and having one end swingably connected to the other end of the first link and the other end supporting the power unit; and the connecting rod having one end supported by the body frame and the other end supporting the power unit and the elastic member is attached to the second link. The vehicle-widthwise vibrations of the power unit occur when the power unit rolls right and left with respect to the straight line extending back and forth and passing an axle of the rear wheel and the crankshaft of the power unit. The elastic member is disposed on the second link located at a position remote from the above-mentioned straight line, in the link mechanism. Thus, the vehicle-widthwise vibrations of the power unit can be absorbed efficiently.

Preferably, the elastic member is provided vehicle-widthwise externally of the link mechanism and is attached in such as manner as to be able to come into contact with an inner lateral surface of the body frame. The elastic member comes into contact with the body frame at a position remote from the vehicle-widthwise center to absorb vibrations. Thus, a vibration-absorbing effect can be enhanced.

### BRIEF DESCRIPTION OF THE DRAWINGS

Fig. 1 is a lateral view (embodiment 1) of a scooter type vehicle provided with a suspension device for a swing type power unit according to the present invention.
Fig. 2 is a first perspective view (embodiment 1) illustrating a body frame central portion and a link mechanism of the scooter type motorcycle according to the present invention.
Fig. 3 is a second perspective view (embodiment 1) illustrating the body frame central portion and link mechanism of the scooter type motorcycle according to the present invention.
Fig. 4 is a perspective view (embodiment 1) illustrating the link mechanism according to the present invention.
Fig. 5 is a perspective view (embodiment 1) illustrating a stopper mechanism of the link mechanism according to the present invention.
Fig. 6 is a perspective view (embodiment 1) illustrating from below an essential portion of the link mechanism according to the present invention.
Fig. 7 is a lateral view (embodiment 1) illustrating the essential portion of the link mechanism according to the present invention.
Fig. 8 is a lateral view (embodiment 1) illustrating the link mechanism according to the present invention.
Fig. 9 is a cross-sectional view taken along line 9-9 of Fig. 7.
Fig. 10 is a cross-sectional view taken along line 10-10 of Fig. 7.
Fig. 11 is a cross-sectional view taken along line 11-11 of Fig. 7.
Fig. 12 includes operational views (embodiment 1) illustrating operation of the stopper mechanism according to the present invention.
Fig. 13 includes operational views (embodiment 1) illustrating operation of a stopper structure composed of the stopper mechanism and a connecting rod according to the present invention.
Fig. 14 includes operational view (embodiment 1) illustrating operation of the link mechanism according to the present invention.
Fig. 15 is a lateral view (embodiment 2) illustrating an essential portion of a suspension device for a swing type power unit according to the present invention.
Fig. 16 is a cross-sectional view taken along line 16-16 of Fig. 15.
Fig. 17 is a lateral view (embodiment 3) illustrating an essential portion of a suspension device for a swing type power unit which does not belong to the present invention.
Fig. 18 includes explanatory views (embodiment 3) illustrating a link structure which does not belong to the present invention.

### MODE FOR CARRYING OUT THE INVENTION

Embodiments of the present invention will hereinafter be described with reference to the accompanying drawings. It is to be noted that the left, right, front and back or rear represent orientations on the basis of a rider riding on a vehicle. In addition, the drawings shall be viewed in the orientation of reference numerals.

### Embodiment 1

A description is given of embodiment 1 of the present invention.

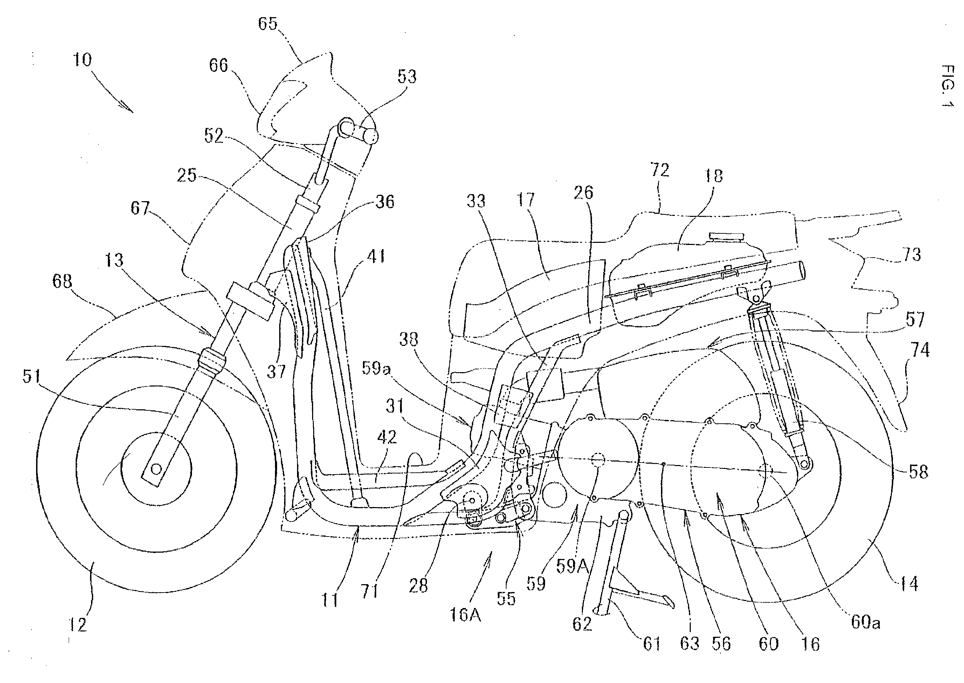

Referring to Fig. 1, a scooter-type vehicle 10 includes a body frame 11 serving as a skeleton; a front wheel suspension steering mechanism 13 provided in a front portion of the body frame 11 to suspend and steer a front wheel 12; a rear wheel suspension drive mechanism 16 connected to a general central portion of the body frame 11 to suspend and drive a rear wheel 14; and a storage box 17 and a fuel tank 18 mounted to a rear upper portion of the body frame 11.

The body frame 11 includes a head pipe 25 provided at a front end; a pair of left and right main frames 26, 27 (only reference numeral 26 on the front side is shown) extending rearward in a general U-shape as viewed from the side from the head pipe 25 and further extending rearward and obliquely upward; and a pair of left and right pivot plates 31, 32 (only reference numeral 31 on the front side is shown) supporting a first pivot shaft 28. In addition, the body frame 11 includes a pair of left and right pivot frames 33 and 34 (only reference numeral 33 on the front side is shown) attached respectively to generally central portions of the main frames 26 and 27 to attach the pivot plates 31 and 32 to the main frame 26 and 27, respectively; and a plurality of cross members (not shown) connecting together the left and right main frames 26, 27. Incidentally, reference numerals 36 to 38 denote reinforcing plates, 41 denotes a reinforcing frame, and a pair of left and right reference numerals 42, 43 (only reference numeral 42 on the front side is shown) is a reinforcing frame.

The front wheel suspension steering mechanism 13 includes a front fork 51 steerably attached to the head pipe 25 and a handlebar 53 attached to an upper end of a steering shaft 52 joined to the front fork 51.

The rear suspension drive mechanism 16 includes the first pivot shaft 28; a link mechanism 55 swingably attached to the first pivot shaft 28; a power unit 56 swingably mounted to the link mechanism 55; an intake device 57 mounted to an upper portion of the power unit 56; an exhaust device (not shown) mounted to a lower portion of the power unit 56; and a rear cushion 58 installed to be spanned between a rear end of the power unit 56 and a rear end of the main frame 26.

The first pivot shaft 28, the link mechanism 55 and the rear cushion unit 58 mentioned above constitute a power unit suspension device 16A suspending the power unit 56.

The power unit 56 includes an engine 59 provided with a cylinder portion 59a extending generally horizontally in the back and forth direction; and a continuously variable transmission 60 provided integrally with a rear portion of the engine 59. The transmission 60 is provided at a rear end with an output shaft 60a serving as an axle of the rear wheel 14. Incidentally, reference numeral 59A denotes a crankshaft provided in the engine 59, 61 denotes a main stand attached to a lower portion of a crankcase 62 constituting part of the power unit 56, and 63 denotes a straight line extending back and forth so as to pass the crankshaft 59A and the output shaft 60a.

Reference numeral 65 in the figure denotes a handlebar cover, 66 denotes a headlamp, 67 denotes a front cover, 68 denotes a front fender, 71 denotes a step floor, 72 denotes a seat, 73 denotes a tail lamp, and 74 denotes a rear fender.

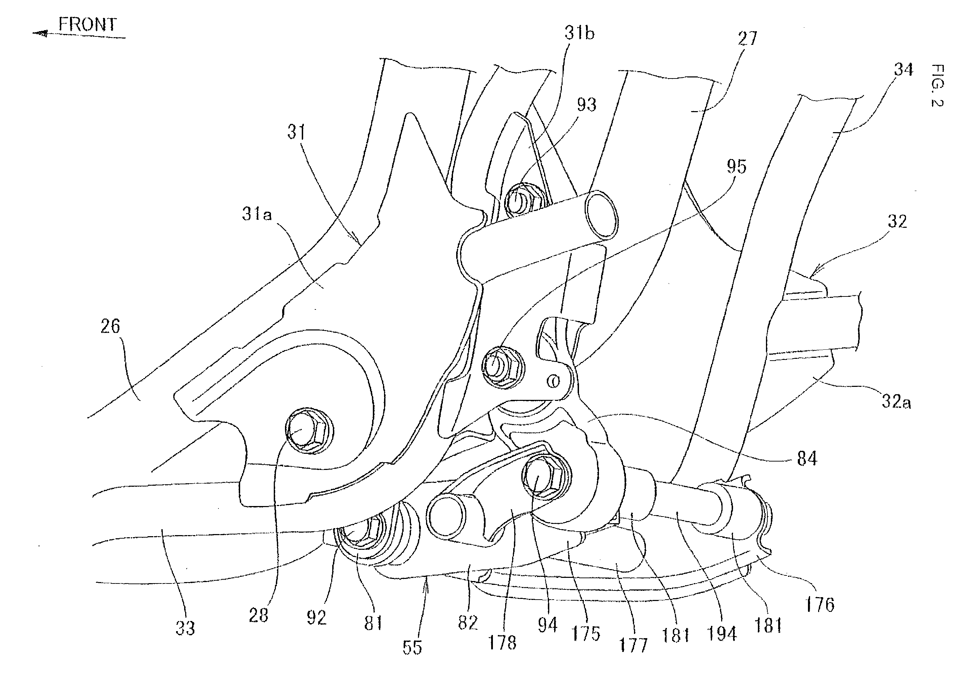

An arrow (FRONT) in Fig. 2 represents the front of the vehicle (this applies to the following).

Referring to Fig. 2, the link mechanism 55 includes first links 81, 81 (only reference numeral 81 on the front side is shown) swingably attached at upper ends to the first pivot shaft 28; a second pivot shaft 92 attached to lower ends of the first links 81, 81; and a second link 82 swingably attached to the second pivot shaft 92. The link mechanism 55 further includes a third pivot shaft 93 attached to an upper portion of an inner pivot plate 31b provided on the side of one of pivot frames 33; a fourth pivot shaft 94 attached to a distal end of the second link 82; and a connecting rod 84 swingably attached to the third pivot shaft 93 and connected to the fourth pivot shaft 94.

The pivot plate 31 is composed of an outer pivot plate 31a mounted to each of outer lateral surfaces of the main frame 26 and of the pivot frame 33, and an inner pivot plate 31b mounted to an inner lateral surface of the main frame 26 and the pivot frame 33.

The pivot plate 32 is composed of an outer pivot plate 32a mounted to each of outer lateral surfaces of the main frame 27 and of the pivot frame 34 and an inner pivot plate 32b (not shown) mounted to each of inner later surfaces of the main frame 27 and of the pivot frame 34.

The connecting rod 84 is also a member attached to the inner pivot plate 31b via an intermediate shaft 95.

The fourth pivot shaft 94 is a shaft swingably supporting the power unit 56 (see Fig. 1).

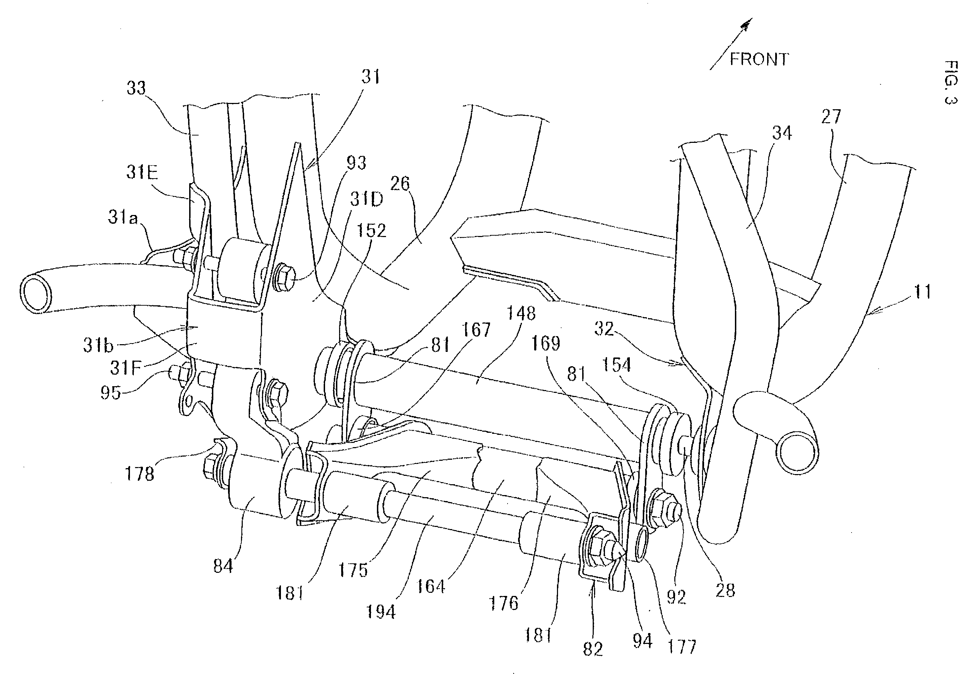

Fig. 3 illustrates the following. The pivot plate 31 is mounted to the left side main frame 26 and pivot frame 33. The pivot plate 32 is mounted to the right side main frame 27 and pivot frame 34. The first pivot shaft 28 is attached to the pivot plates 31, 32. The first links 81, 81 are swingably attached to the first pivot shaft 28. The second link 82 is swingably attached to the first links 81, 81 via a second pivot shaft 92. A fourth pivot shaft 94 is attached to the rear end of the second link 82. The connecting rod 84 is swingably attached to the inner pivot plate 31b via the third pivot shaft 93. The lower end of the connecting rod 84 is connected to the fourth pivot shaft 94. The intermediate shaft 95 connects the inner pivot plate 31b with the intermediate portion of the connecting rod 84.

The inner pivot plate 31b is a member integrally formed of an inner plate portion 31D mounted at its front edge portion to the main frame 26, an outer plate portion 31E attached at its front edge portion to the pivot plate frame 33, and a rear plate portion 31F connecting together the respective edge portions of the inner plate portion 31D and the outer plate portion 31E. The third pivot shaft 93 and the intermediate shaft 95 are attached to the inner plate portion 31D and the outer plate portion 31E.

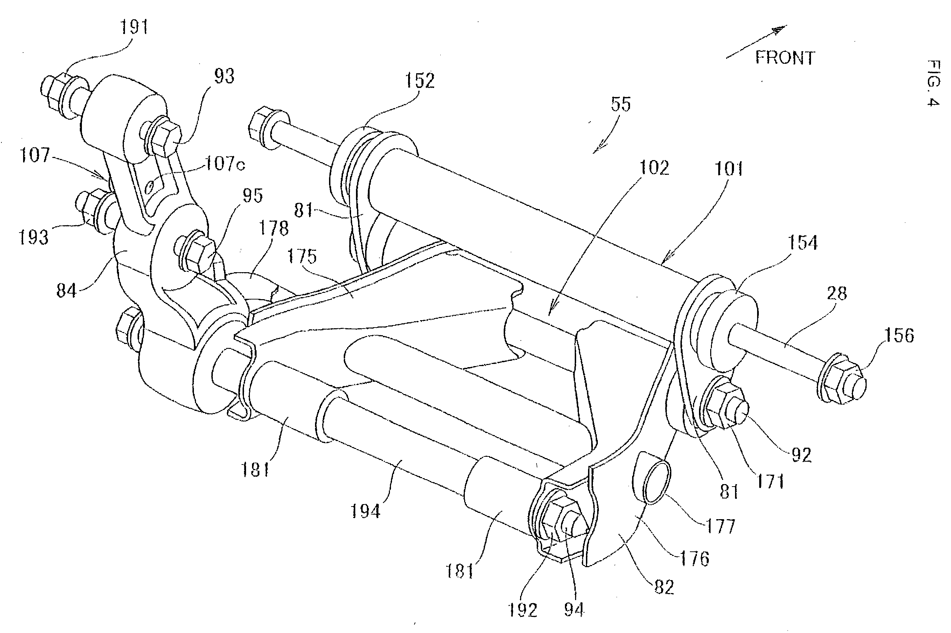

Referring to Fig. 4, the link mechanism 55 mainly includes the first links 81, 81, the second pivot shaft 92, the second link 82, the third pivot shaft 93, the connecting rod 84, the fourth pivot shaft 94 and the intermediate shaft 95. The link mechanism 55 further includes a front upper connecting mechanism 101 connecting the first pivot shaft 28 with the first link 81 and a front lower connecting mechanism 102 connecting the first link 81 with the second pivot shaft 92. The front upper connecting mechanism 101 and the front lower connecting mechanism 102 are detailed later.

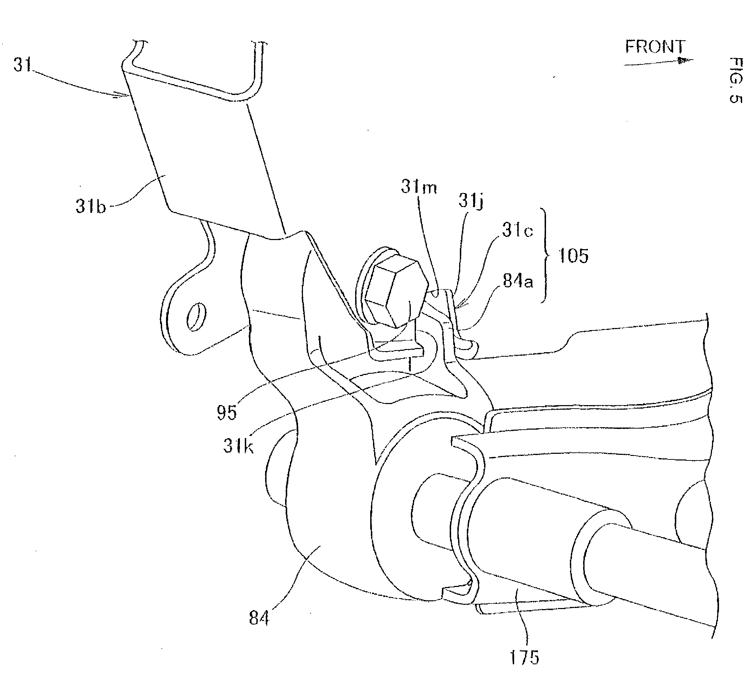

Referring to Fig. 5, a downward opening notch 31c is formed at a rear lower portion of the pivot plate 31, specifically, of the inner pivot plate 31b and at a position forwardly and obliquely downward of the intermediate shaft 95. A projection 84a is formed on the inner surface of the connecting rod 84 so as to project upward therefrom and be inserted into the notch 31c. The notch 31c and the projection 84a constitute a stopper mechanism 105.

The notch 31c has a front edge portion 31j, a rear edge portion 31k and an upper edge portion 31m. The projection 84a comes into contact with the front edge portion 31j or the rear edge portion 31k to restrict the back and forth directional swing of the connecting rod 84 relative to the inner pivot plate 31b.

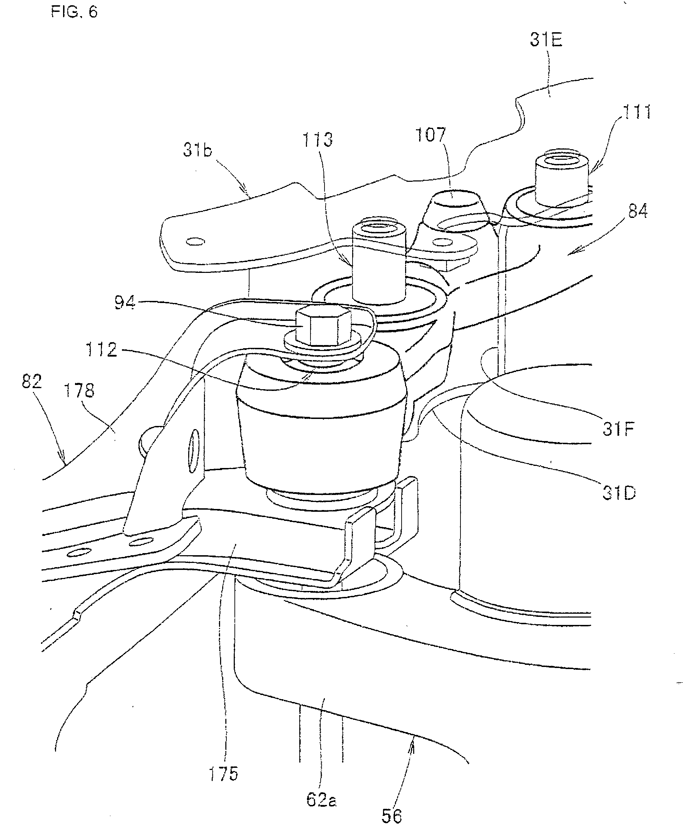

Fig. 6 illustrates the connecting rod 84 (which is a portion depicted with solid lines) and the periphery thereof as viewed from obliquely below so that the inner pivot plate 31b can be seen through.

An elastic member 107 is attached to an external lateral surface of the connecting rod 84. The elastic member 107 can be brought into contact with the inner surface of the outer plate portion 31E as an outer wall of the inner pivot plate 31b which is a portion of the body frame 11.

The elastic member 107 is a member for absorbing the vehicle-widthwise vibrations of the power unit 56 via the connecting rod 84.

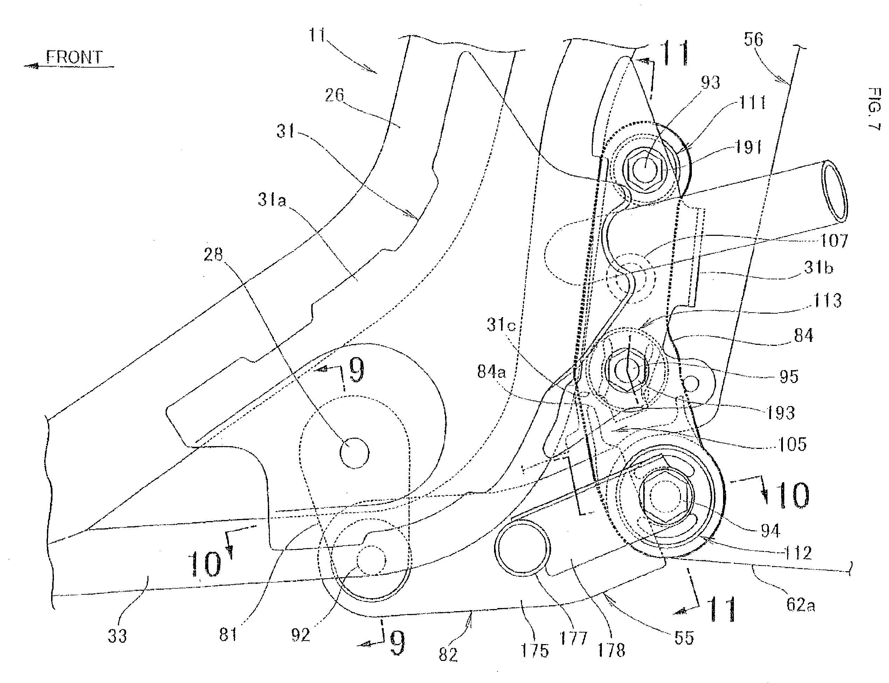

Referring to Fig. 7, the first links 81 extend upward and downward. The second link 82 extends in the back and forth direction, specifically, slightly rearward upward and rearward. The connecting rod 84 extends in the up and down direction. The second link 82 is shifted back and forth around the first pivot shaft 28 and the third pivot shaft 93. Therefore, the link mechanism 55 constitutes a parallel link in which the first links 81 and the connecting rod 84 are generally parallel to each other. That is to say, the first links 81 and the connection rod 84 permit the back and forth directional movement of the power unit 56.

The second link 82 extends in the back and forth direction and swings around the second pivot shaft 92 and the fourth pivot shaft 94 elastically supports the side of the connecting rod 84. This permits the vertical movement of the power unit 56.

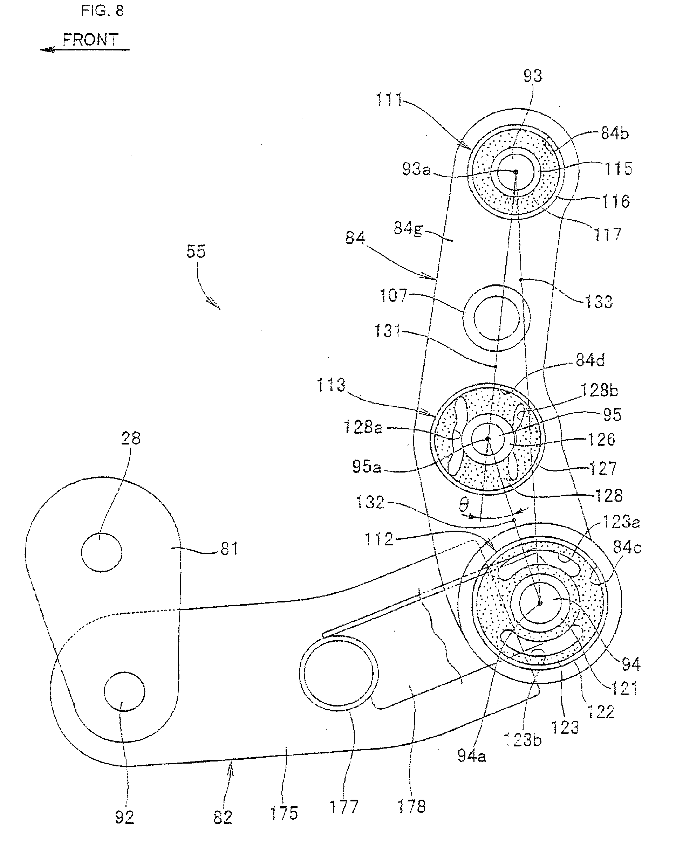

Referring to Fig. 8, the connecting rod 84 of the link mechanism 55 is a member bored with through-holes 84b, 84c and 84d at an upper end, a lower end and an intermediate portion, respectively, to connect with the third pivot shaft 93, the fourth pivot shaft 94 and the intermediate shaft 95, respectively. In addition, rubber bushes 111, 112 and 113 are fitted into the through-holes 84b, 84c and 84d, respectively.

The rubber bush 111 is composed of an inner tube 115 fitted to the third pivot shaft 93, an outer tube 116 provided externally of the inner tube 115 and fitted to the through-hole 84b, and rubber 117 bonded to each of the inner tube 115 and the outer tube 116.

The rubber bush 112 is composed of an inner tube 121 fitted to the fourth pivot shaft 94, an outer tube 122 provided externally of the inner tube 121 and fitted to the through-hole 84c, and rubber 123 bonded to each of the inner tube 121 and the outer tube 122.

Reference numerals 123a, 123b in the figure denote arcuate hole portions bored in the rubber 123 above and below the inner tube 121 to make it easy for the rubber 123 to be deformable up and down.

The rubber bush 113 is composed of an inner tube 126 fitted to the intermediate shaft 95, an outer tube 127 provided externally of the inner tube 126 and fitted to the through-hole 84d, and rubber 128 bonded to each of the inner tube 126 and the outer tube 127.

Reference numerals 128a, 128b in the figure denote hole portions bored in rubber 128 forward and rearward of the inner tube 126 to make it easy for the rubber 128 to be deformable up and down.

The rubber-made elastic member 107 is installed between the through-hole 84b and through-hole 84d of the connecting rod 84 and on the external lateral surface 84g of the connecting rod 84.

A line segment connecting an axis 93a (the axis 93a is indicated with a filled circle) of the third pivot shaft 93 with an axis 95a (the axis 95a is indicated with a filled circle) of the intermediate shaft 95 is denoted with reference numeral 131. A line segment connecting the axis 95a of the intermediate shaft 95 with an axis 94a (the axis 94a is indicated with a filled circle) of the fourth pivot shaft 94 is denoted with reference numeral 132. A line segment connecting the axis 93a of the third pivot shaft 93 with the axis 94a of the fourth pivot shaft 94 is denoted with reference numeral 133. The line segment 132 is tilted toward the rearward of the vehicle by an angle θ relative to the line segment 131. In addition, the line segments 131, 132 are drawn in a dogleg shape.

That is to say, the fourth pivot shaft 94 is disposed vehicle-rearward of the third pivot shaft 93 and the intermediate shaft 95; therefore, the fourth pivot shaft 94 and the parts associated thereto can largely be shifted to the vehicle body side, i.e., back and forth and up and down without interference with the pivot plates 31, 32 (see Fig. 3) and the pivot plates 33, 34 (see Fig. 3).

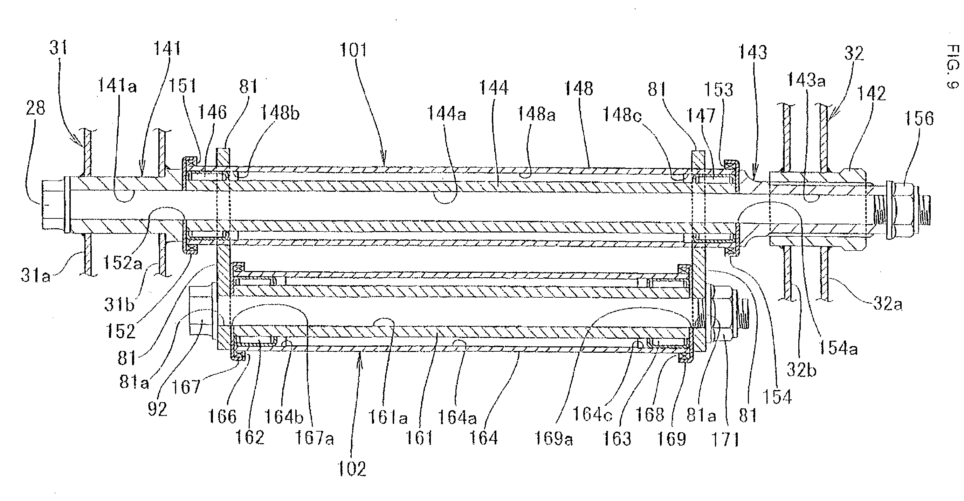

Referring to Fig. 9, the front upper connecting mechanism 101 connecting the first pivot shaft 28 with the first links 181 includes a left tubular portion 141, a right external tubular portion 142, a right inner tubular portion 143, an inner tube 144, needle bearings 146, 147, an outer tube 148, an end plate 152, and an end plate 154. The left tubular portion 141 is attached to the pivot plate 31 so as to pass therethrough and provided with a hollow portion 141a adapted to receive the first pivot shaft 28 inserted therethrough. The right external tubular portion 142 is attached to the pivot plate 32 so as to pass therethrough. The right inner tubular portion 143 is threadedly joined to the right external tubular portion 142 and is provided with a hollow portion 143a adapted to receive the first pivot shaft 28 inserted therethrough. The inner tube 144 is provided with a hollow portion 144a adapted to receive the first pivot shaft 28 inserted therethrough. The needle bearings 146, 147 are fitted to both ends of the outer circumferential surfaces of the inner tube 144. The outer tube 148 is formed on both ends of the hollow portion 148a with inner circumferential surfaces 148b, 148c greater in inner diameter than the hollow portion 148a so as to receive the corresponding needle bearings 146, 147 fitted thereto. The end plate 152 is brought into contact with one end face of the inner tube 144, attached with a dust seal 151 to prevent dust, etc. from entering the needle bearing 146, and bored with an insertion hole 152a of the first pivot shaft 28. The end plate 154 is brought into contact with the other end face of the inner tube 144, attached with a dust seal 153 to prevent dust, etc. from entering the needle bearing 147, and bored with an insertion hole 154a of the first pivot shaft 28.

Further, the front upper connecting mechanism 101 is such that the first links 81, 81 are welded to both the end outer circumferential surfaces of the outer tube 148 and the outer tube 148 is turned with respect to the inner tube 144 via the needle bearings 146, 147 so that the first links 81, 81 are swung around the first pivot shaft 28. Incidentally, reference numeral 156 denotes a nut threadedly joined to an external screw at an end of the first pivot shaft 28 formed like a bolt.

The front lower connecting mechanism 102 connecting the first links 81, 81 with the second pivot shaft 92 includes an inner tube 161, needle bearings 162, 163, an outer tube 164, an end plate 167, and an end plate 169. The inner tube 161 is provided with a hollow portion 161a adapted to receive the second pivot shaft 92 inserted therethrough. The needle bearings 162, 163 are fitted to both ends of the outer circumferential surfaces of the inner tube 161. The outer tube 164 is formed at both ends of the hollow portion 164a with inner circumferential surfaces 164b, 164c greater in inner diameter than the hollow portion 164a so as to receive the needle bearings 162, 163 fitted thereto. The end plate 167 is brought into contact with one end face of the inner tube 161, attached with a dust seal 166 to prevent dust, etc. from entering the needle bearing 162, and bored with an insertion hole 167a of the second pivot shaft 92. The end plate 169 is brought into contact with the other end face of the inner tube 161, attached with a dust seal 168 to prevent dust, etc. from entering the needle bearing 163, and bored with an insertion hole 169a of the second pivot shaft 92.

The rotation of the outer tube 164 with respect to the internal tube 161 via the needle bearings 162, 163 allows the second link 82 (see Fig. 7) to swing around the second pivot shaft 92. Reference numeral 81a denotes a bolt insertion hole bored in the first link 81 to pass the second pivot shaft 92 therethrough. Reference numeral 171 denotes a nut threadedly joined to an external screw of an end of the second pivot shaft 92 formed like a bolt.

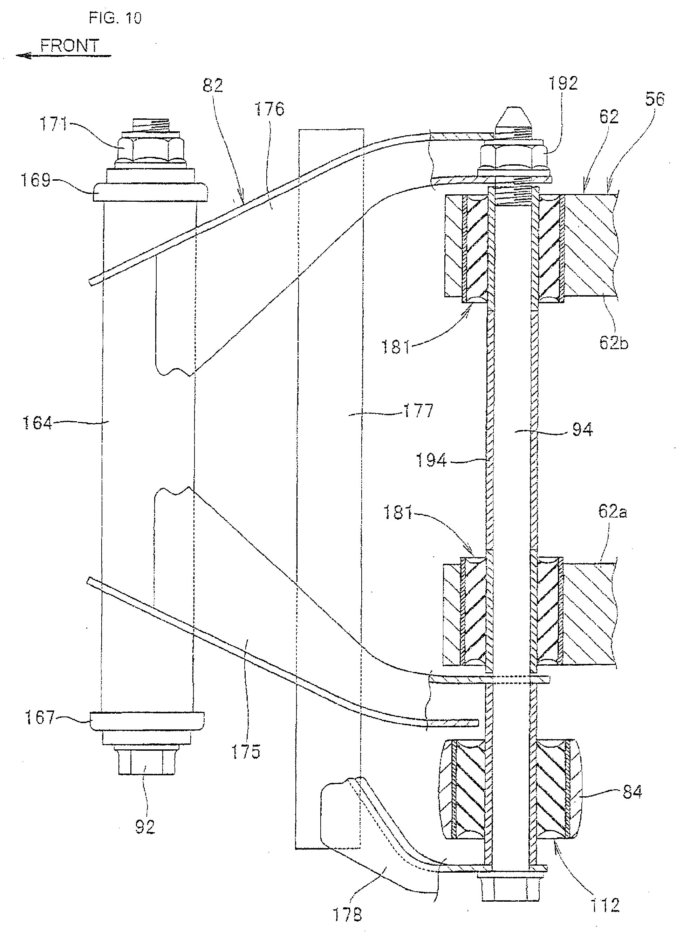

Referring to Fig. 10, the second link 82 includes a left arm 175 and a right arm 176 welded to the outer tube 164 so as to be increasingly broadened as they go rearward; an intermediate connection pipe 177 attached to respective intermediate portions of the left arm 175 and the right arm 176 so as to extend vehicle-widthwise; and an end arm 178 joined to an end portion, of the intermediate connection pipe 177, projecting from the left arm 175 left-laterally of the vehicle body. The left arm 175, the right arm 176 and the end arm 178 which are three connecting support portions support the fourth pivot shaft 94.

The connecting rod 84 is located between the left arm 175 (which is a first connecting support portion) and the end arm 178 (which is a second connecting support portion) and is supported by the left arm 175 and the end arm 178 via the fourth pivot shaft 94. Thus, support rigidity adapted to support the connecting rod 84 can be increased. Incidentally, reference numerals 62a, 62b denote link connecting portions provided on the crankcase 62 of the power unit 56 to project forward.

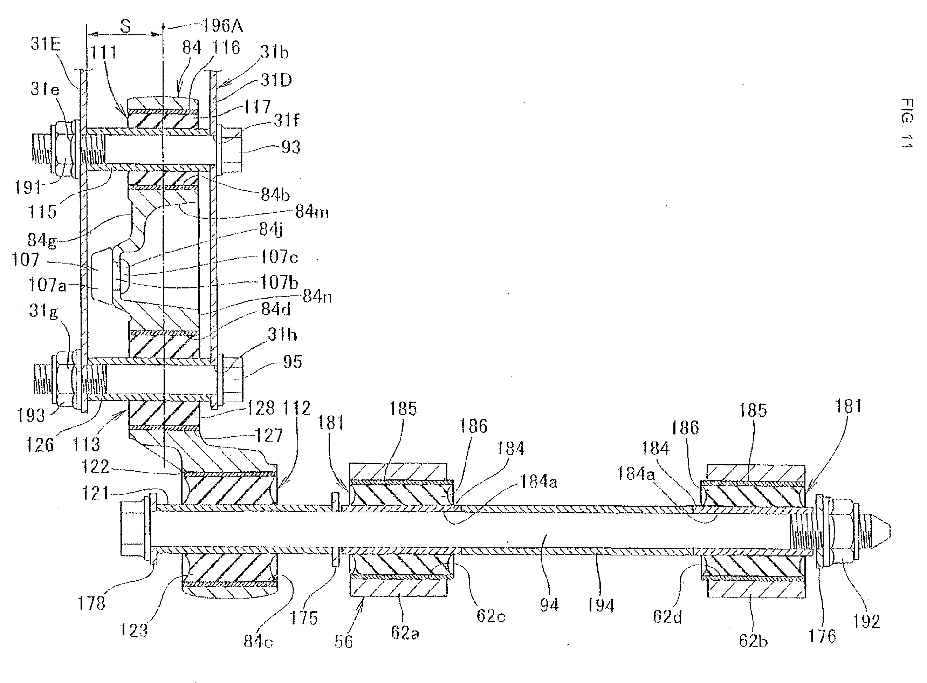

Fig. 11 illustrates the fact that the link connecting portions 62a, 62b of the power unit 56 are connected to the fourth pivot shaft 94 via rubber bushes 181, 181.

The rubber bush 181 includes an inner tube 184, an outer tube 185 and rubber 186. The inner tube 184 is bored with a hollow portion 184a adapted to receive the fourth pivot shaft 94 inserted therethrough. The outer tube 185 is fitted to a through-hole 62c bored in the link connecting portion 62a and to a through-hole 62d bored in the link connecting portion 62b. The rubber 186 is bonded to each of the inner tube 184 and the external tube 185.

In the figure, reference numerals 31e, 31f denote bolt insertion holes bored in the inner pivot plate 31b to pass the pivot shaft 93 therethrough. Reference numerals 31g, 31h denote bolt insertion holes bored in the inner pivot plate 31b to pass the intermediate shaft 95 therethrough. Reference numeral 191 denotes a nut threadedly joined to an external screw at an end portion of the third pivot shaft 93. Reference numeral 192 denotes a nut threadedly joined to an external screw at an end portion of the fourth pivot shaft 94. Reference numeral 193 denotes a nut threadedly joined to an external screw at an end portion of the intermediate shaft 95. Reference numeral 194 denotes a collar adapted to receive the fourth pivot shaft 94 inserted therethrough and disposed between the left and right rubber bushes 181, 181.

The connecting rod 84 is such that the through-hole 84c supporting the fourth pivot shaft 94 is disposed closer to the vehicle-widthwise center than the through-holes 84b and 84d supporting the third pivot shaft 93 and the intermediate shaft 95, respectively. In other words, the lower end portion of the connecting rod 84 is disposed closer to the vehicle-widthwise center. Therefore, the bank angle of the scooter-type vehicle 10 (see Fig. 1) can be increased.

The connecting rod 84 is such that the external surface 84g is bored with a through-hole 84j and an elastic member 107 is attached to the through-hole 84j so as to be fitted thereto. Incidentally, reference numeral 84m denotes a recessed portion formed in an inner lateral surface 84n of the connecting rod 84 and a portion formed for weight reduction. Reference numeral 196A denotes a width-centerline passing the widthwise center of the connecting rod 84 and having a position before the connecting rod 84 is displaced vehicle-widthwise. A distance between the outer plate portion 31E and the width-centerline 196A is denoted with symbol S.

The elastic member 107 includes a head portion 107a, a fitting portion 107b and a lock portion 107c. The head portion 107a can be abutted against the outer plate portion 31E of the inner pivot plate 31b when the power unit 56 is swung in the vehicle-width direction. The fitting portion 107b extends from the head portion 107a toward the vehicle-widthwise inside. The locking portion 107c is formed at the end of the fitting portion 107b to have an external diameter greater than that of the fitting portion 107b. The fitting portion 107b is fitted to the through-hole 84j of the connecting rod 84. In the state of non-vibrations, the head portion 107a and the outer plate portion 31E have a predetermined gap therebetween, i.e., are spaced apart from each other.

Even if the connecting rod 84 is displaced on both left and right sides in the vehicle-width direction with respect to the inner pivot plate 31b, the head portion 107a operates to reduce the displacement in cooperation with the rubber bushes 111, 113.

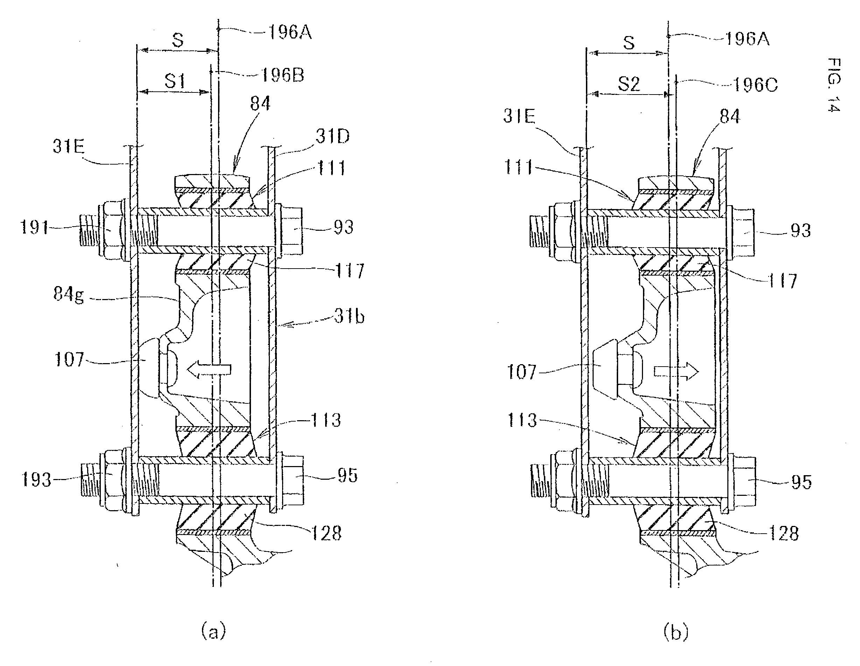

That is to say, the vehicle-widthwise vibrations of the power unit 56 connected to the connecting rod 84 can be absorbed. The detailed operation of the elastic member 107 is described with reference to Fig. 14.

A description is next given of operation of the stopper mechanism 105 described above.

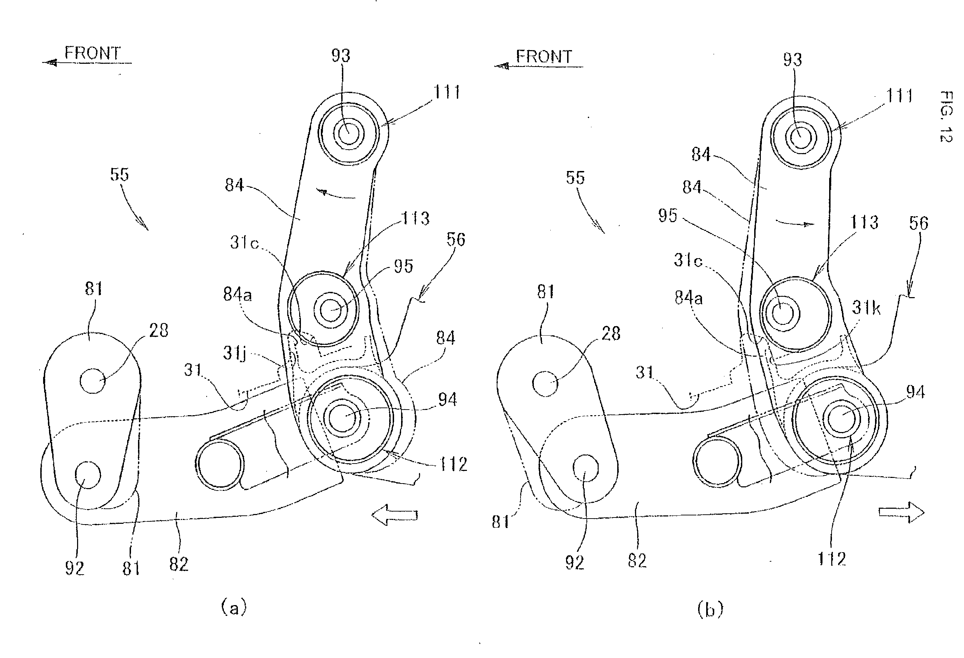

Imaginary lines in Figs. 12(a), (b) illustrate states of the constituent elements of the link mechanism 55 before movement or swing.

In Fig. 12(a), for example, if the power unit 56 is moved forward of the vehicle body as indicated with a blank arrow, the connecting rod 84 is swung around the pivot shaft 93 in an arrow direction and eventually stopped by the reaction force of rubber resulting from the bend of the rubber bushes 112, 113.

However, if the forward swing angle of the connecting rod 84 is further increased, the rubber bushes 112, 113 are largely bent so that the projection 84a provided on the connecting rod 84 is brought into contact with the front edge portion 31j of the notch 31c on the side of the pivot plate 31. Thus, the swing of the connecting rod 84 relative to the pivot plate 31 is stopped.

In Fig. 12(b), for example, if the power unit 56 is moved rearward of the vehicle body as indicated with a blank arrow, the connecting rod 84 is swung around the third pivot shaft 93 in an arrow direction and eventually stopped by the reactive force of rubber resulting from the bend of the rubber bushes 112, 113.

However, if the rearward swing angle of the connecting rod 84 is further increased, the rubber bushes 112, 113 are largely bent so that the projection 84a of the connecting rod 84 is brought into contact with the rear edge portion 31k of the notch 31c on the side of the pivot plate 31. Thus, the swing of the connecting rod 84 with respect to the pivot plate 31 is stopped.

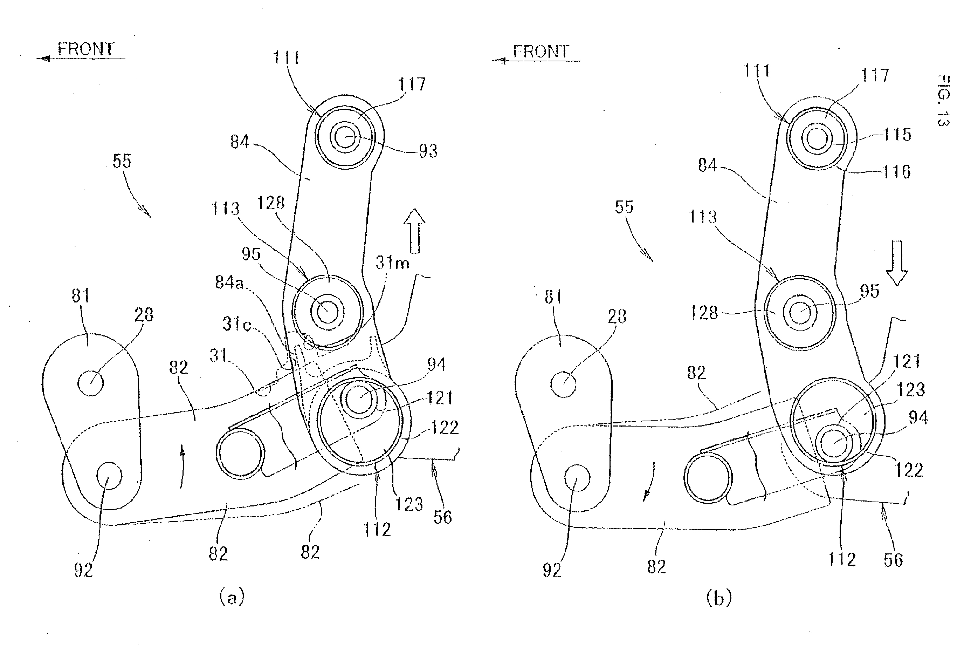

Imaginary lines in Figs. 13(a), (b) illustrate states of the constituent elements of the link mechanism 55 before movement or swing.

In Fig. 13(a), if the power unit 56 is moved upward as indicated with a blank arrow, the fourth pivot shaft 94 is moved upward and the second link 82 is swung around the second pivot shaft 92 in an arrow direction so that the rubber bush 112 of the connecting rod 84 is bent to increase the upward movement of the fourth pivot shaft 94. Thus, the inner tube 121 of the rubber bush 112 comes close to the outer tube 122 to largely compress the rubber 123 between the inner tube 121 and the outer tube 122 to generate a large elastic force. This elastic force stops the rise of the pivot shaft 94 with respect to the connecting rod 84.

Incidentally, in this case, the upward bend of the rubber 117, 128 of the rubber bushes 111, 113 is extremely slight compared with that of the rubber 123 of the rubber bush 112. Therefore, the positional relationship of the connecting rod 84 relative to the pivot plate 31 remains virtually unchanged. Thus, it can be said that the upward travel distance of the power unit 56 is virtually a travel distance of the fourth pivot shaft 94 relative to the connecting rod 84.

In Fig. 13(b), if the power unit 56 is moved downward as indicated with a blank arrow, the fourth pivot shaft 94 is moved downward and the second link 82 is swung around the second pivot shaft 92 in the direction of arrow so that the rubber bush 112 of the connecting rod 84 is largely bent to increase the movement of the fourth pivot shaft 94. Thus, the inner tube 121 of the rubber bush 112 comes close to the outer tube 122 to largely compress the rubber 123 between the inner tube 121 and the outer tube 122 to generate a large elastic force. This elastic force stops the lowering of the fourth pivot shaft 94 relative to the connecting rod 84.

Incidentally, in this case, the downward bend of the rubber 117, 128 of the rubber bushes 111, 113 is extremely slight compared with that of the rubber 123 of the rubber bushes 112. Therefore, the positional relationship of the connecting rod 84 with respect to the pivot plate 31 remains virtually unchanged. Thus, it can be said that the downward travel distance of the power unit 56 is virtually a travel distance of the fourth pivot shaft 94 with respect to the connecting rod 84.

Referring to Fig. 14(a), if the power unit 56 (see Fig. 1) is displaced leftward of the vehicle body so that the connecting rod 84 is displaced leftward in the vehicle-width direction as indicated with a blank arrow, the elastic member 107 is compressed and the rubber bushes 111, 113 are bent leftward of the vehicle body.

If the amount of displacement of the connecting rod 84 is further increased, an elastic force generated by the elastic member 107 and the rubber bushes 111, 113 is increased to stop the displacement of the connecting rod 84.

If it is assumed in this case that a distance between the outer plate portion 31E and a width-centerline 196B after the displacement of the connecting rod 84 is S1, the relationship between the distance S1 and a distance S between the outer plate portion 31E and the width-centerline 196A before the displacement of the connecting rod 84 is such that S1 < S.

Referring to Fig. 14(b), if the power unit 56 (see Fig. 1) is displaced rightward of the vehicle body so that the connecting rod 84 is displaced rightward in the vehicle-width direction as indicated with a blank arrow, the elastic member 107 is moved in a direction away from the outer plate direction 31E and the rubber bushes 111, 113 are bent rightward of the vehicle body.

If the amount of displacement of the connecting rod 84 is further increased, the elastic force generated by the rubber bushes 111, 113 is gradually increased to stop the displacement of the connecting rod 84.

If it is assumed in this case that a distance between the outer plate portion 31E and a width-centerline 196C after the displacement of the connecting rod 84 is S2, the relationship among the distance S2, the distance S between the outer plate portion 31E and the width-centerline 196A before the displacement of the connecting rod 84, and the distance S1 between the outer plate portion 31E and the width-centerline 196A (see Fig. 14(a)) of the connecting rod 84 is such that S1 < S < S2.

As illustrated in Figs. 14(a), (b), the left and right displacement of the connecting rod 84 can be suppressed by the elastic member 107 and the rubber bushes 111, 113. Therefore, the elastic member 107 and the rubber bushes 111, 113 can absorb the vehicle-widthwise vibrations of the power unit 56.

### Embodiment 2

A description is next given of embodiment 2 of the present invention. The same configurations as those of embodiment 1 described above are denoted with like reference numerals and their detailed descriptions are omitted.

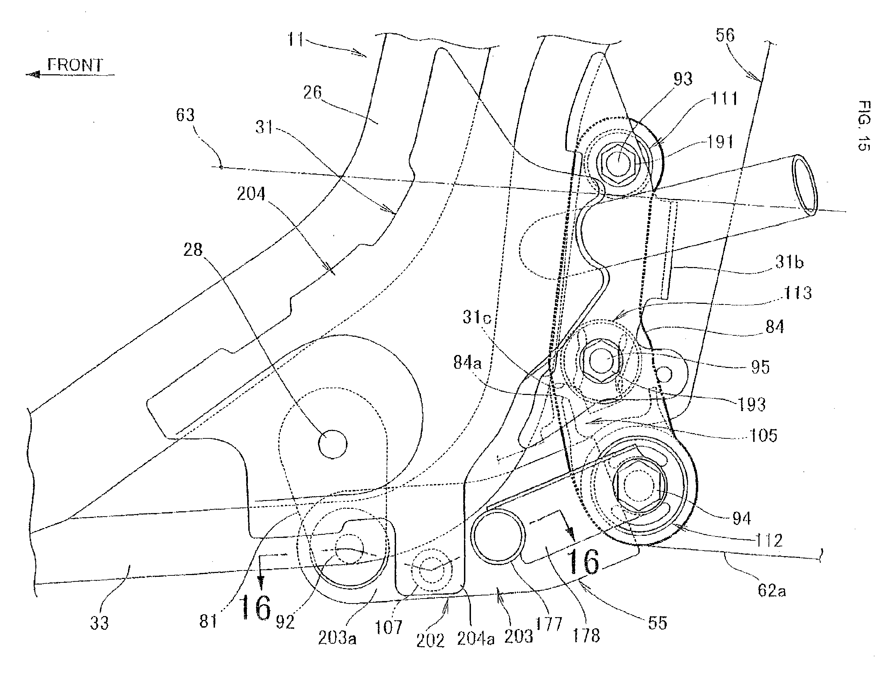

Fig. 15 illustrates the following. An elastic member 107 is attached to an external lateral surface of a second link 202 swingably attached to a second pivot shaft 92, specifically, to an external lateral surface 203a of a left arm 203 constituting part of the second link 202. The elastic member 107 is brought into contact with an outer pivot plate 204 mounted to a main frame 26, specifically, to an inner lateral surface of a downward projecting portion 204a formed integrally with a lower portion of the outer pivot plate 204 in a compressed state.

The second link 202 is different from the second link 82 (see Fig. 10) illustrated in embodiment 1 in only the left arm 203.

The left arm 203 is different from the left arm 175 (see Fig. 10) illustrated in embodiment 1 in provision of a through-hole (not shown) adapted to receive the elastic member 107 attached thereto.

The outer pivot plate 204 is different from the outer pivot plate 31a (see Fig. 7) illustrated in embodiment 1 in formation of a downward projecting portion 204a with which the elastic member 107 is brought into contact from the vehicle-widthwise inside.

In this way, the elastic member 107 is provided on the second link 202 and brought into contact with the outer pivot plate 204. Thus, it is possible to absorb the vehicle-widthwise vibrations of the power unit 56 via the connecting rod 84.

In Fig. 1, the vehicle-widthwise vibrations of the power unit 56 occur when the power unit 56 rolls right and left with respect to the straight line 63 extending back and forth and passing the output shaft 60a as an axle of the rear wheel 14 and the crankshaft 59A of the power unit 56.

The second link 202 illustrated in Fig. 15 is disposed at a position remote from the straight line 63 mentioned above. Therefore, since the elastic member 107 is attached to the second link 202, the vehicle-widthwise vibrations of the power unit 56 can be absorbed efficiently.

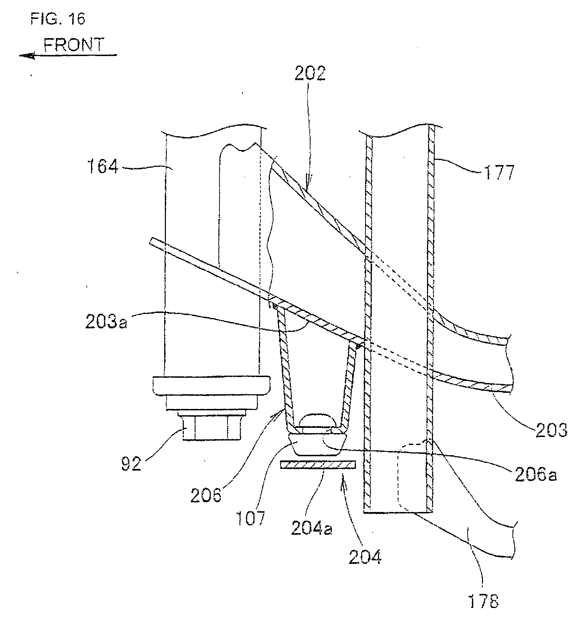

Referring to Fig. 16, a support member 206 U-shaped in cross-section is attached to an external lateral surface 203a of the left arm 203 of the second link 202. The elastic member 107 is attached to the end of the support member 206. Incidentally, reference numeral 206a denotes a through-hole bored in the support member 206 to receive the elastic member 107 fitted thereto.

Specifically, the support member 206 is disposed between the outer tube 164 and the intermediate connection pipe 177.

A gap is provided between the elastic member 107 and the downward projecting portion 204a of the outer pivot plate 204. When the power unit 56 (see Fig. 16) vibrates in the vehicle-width direction, the elastic member 107 can be abutted against the downward projecting portion 204a.

### Embodiment 3

A description is next given of embodiment 3 which does not belong to the present invention. The same configurations as those of embodiments 1 and 2 described above are denoted with like reference numerals and their detailed descriptions are omitted.

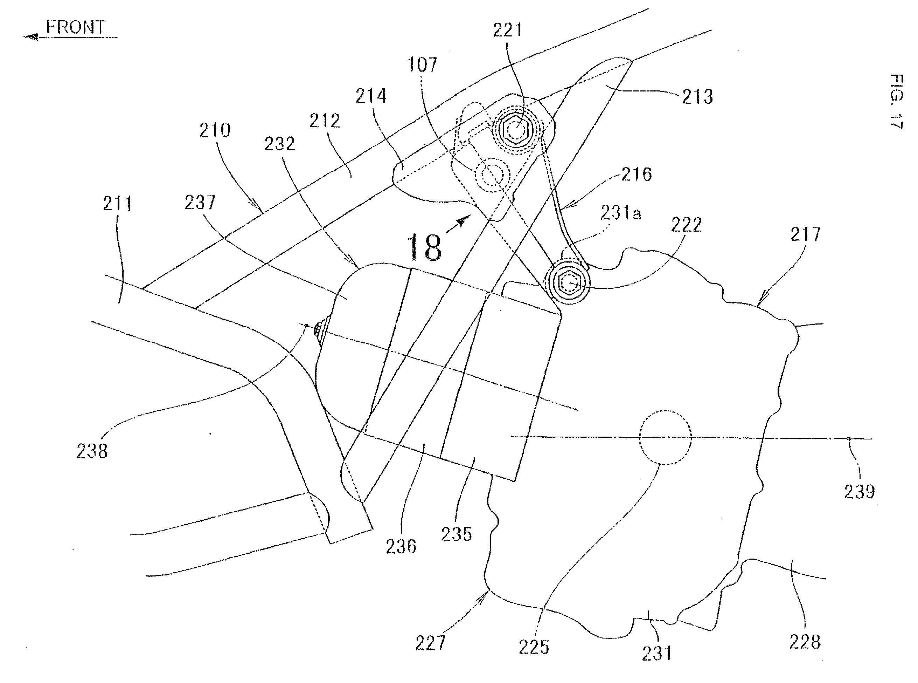

Referring to Fig. 17, a body frame 210 of the motorcycle includes a main frame 211 extending rearward from a head pipe; a rear frame 212 joined to a rear portion of the main frame 211; a sub-frame 213 joined to each of a rear end portion of the main frame 211 and an intermediate portion of the rear frame 212; and a reinforcing plate 214 mounted to the corresponding vicinities of the joint portion between the rear frame 212 and the sub-frame 213

The reinforcing plate 214 is provided right and left as a pair on the body frame 210. A power unit 217 is suspended by the left and right reinforcing plates 214 via a link 216. Incidentally, reference numeral 221 denotes a bolt connecting the reinforcing plate 214 with the link 216 and 222 denotes a bolt connecting the link 216 with the power unit 217.

The power unit 217 is composed of an engine 227 and a continuously variable transmission 228 extending rearward from the engine 227. The engine 227 includes a crankcase 231 housing a crankshaft 225 therein and a cylinder portion 232 mounted to a front end portion of the crankcase 231. The link 216 is connected to a to-be-suspended portion 231a provided on an upper portion of the crankcase 231.

The cylinder portion 232 includes a cylinder block 235 mounted to the crankcase 231; a cylinder head 236 mounted to the cylinder block 235; and a head cover 237 covering an end opening of the cylinder head 236. Incidentally, reference numeral 238 denotes an axis of the cylinder portion 232, extending generally horizontally in the back and forth direction of the vehicle.

The link 216 is disposed above the cylinder portion 232. An elastic member 107 is attached to a left lateral surface of the link 216 so as to be able to come into contact with the inner surface of the left reinforcing plate 214.

Thus, the elastic member 107 can suppress the vehicle-widthwise displacement of the link 216.

Reference numeral 239 in the figure denotes a straight line extending back and forth and passing the crankshaft 225 and an axle of a rear wheel. The elastic member 107 is provided at a position significantly distant upward from the straight line 239.

Thus, when the power unit 217 rolls right and left with respect to the straight line 239, the elastic member 107 comes into contact with the reinforcing plate 214 so that it can efficiently absorb the vehicle-widthwise vibrations of the power unit 217.

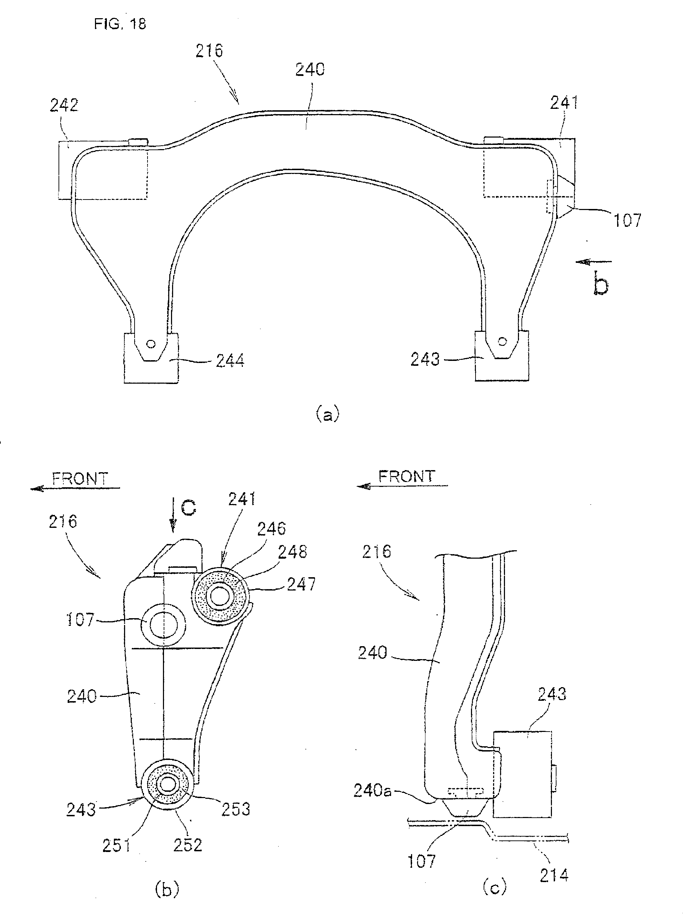

Fig. 18 (a) is a view as viewed from arrow 18 of Fig. 17. The link 216 includes a link main body 240 formed in a downward opening U-shape; a pair of left and right body-side mount portions 241, 242 provided at upper corners of the U-shape of the link main body 240 to be mounted to the body frame 210 (see Fig. 17); and engine-side mount portions 243, 244 provided at lower end portions of the U-shape of the link body 240 to be mounted to the crankcase 231 (see Fig. 17) of the engine 227.

Fig. 18(b) is a view as viewed from arrow b of Fig. 18(a). The body-side mount portion 241 is a rubber bush composed of an inner tube 246 adapted to receive the bolt 221 (see Fig. 17) passed therethrough, an outer tube 247 surrounding the inner tube 246 and mounted to the link main body 240, and rubber 248 bonded to each of the inner tube 246 and the outer tube 247. The body-side mount portion 242 (see Fig. 18(a)) has the same configuration as that of the body-side mount portion 241 mentioned above and their explanation is omitted.

The engine-side mount portion 243 is a rubber bush composed of an inner tube 251 adapted to receive the bolt 222 (see Fig. 17) passed therethrough, an outer tube 252 surrounding the inner tube 251 and mounted to the link main body 240, and rubber 253 adhered to each of the inner tube 251 and the outer tube 252. The engine-side mount portion 244 (see Fig. 18(a)) has the same configuration as that of the body-side mount portion 243 mentioned above and their explanation is omitted.

Fig. 18(c) is a view as viewed from arrow c of Fig. 18(b). The elastic member 107 is attached to a left lateral surface 240a of the link main body 240. A gap is provided between the elastic member 107 and the reinforcing plate 214.

In this way, when the link 216 is displaced right and left in the vehicle-width direction with respect to the body frame 210, such displacement can be received by the elastic member 107 and the body-side mount portions 241, 242 and the engine-side mount portions 243, 244 which are the rubber bushes. Thus, the elastic member 107, the body-side mount portions 241, 242 and the engine-side mount portions 243, 244 can absorb the vehicle-widthwise vibrations of the power unit 217 via the link 216.

As illustrated in Figs. 1, 7 and 11, in the suspension device 16A for the swing type power unit 56 including the body frame 11, the power unit 56 applying a drive force to the rear wheel 14, the link mechanism 55 allowing the body frame 11 to support the front portion of the power unit 56 swingably back and forth and up and down, and the rear cushion unit 58 serving as a damper allowing the body frame 11 to suspend the rear portion of the power unit 56, the connecting rod 84 serving as a body-side to-be-supported portion provided on the link mechanism 55 to allow the body frame 11 to support the link mechanism 55 is elastically supported and the elastic member 107 is attached to the link mechanism 55 in such a manner as to be able to come into vehicle-widthwise contact with the body frame 11.

With this, the elastic member 107 attached to the link mechanism 55 can absorb the vehicle-widthwise vibrations of the power unit 56 in addition to the back-and-forth directional and up-and-down directional vibrations of the power unit 56.

Since only the elastic member 107 is attached to the link mechanism 55, the link mechanism 55 can be downsized and thus the suspension device 16A for the swing-type power unit 56 can be downsized.

As illustrated in Fig. 7, the link mechanism 55 includes the first links 81 extending up and down and swingably mounted at one ends to the body frame 11; the second link 82 extending back and forth, and having one end swingably connected to the other end of the first link 81 and the other end supporting the power unit 56; and the forged connecting rod 84 having one end supported by the body frame 11 and the other end supporting the power unit 56. The elastic member 107 is attached to the connecting rod 84.

With this, the forged connecting rod 84 is provided with the through hole 84j serving as an attachment portion adapted to attach the elastic member 107 thereto. Therefore, the through-hole 84j can be formed instantly and easily in the forging process compared with provision of the attachment portion in other materials. Thus, cost reduction can be achieved.

As illustrated in Figs. 1 and 15, the link mechanism 55 includes the first links 81 extending up and down and swingably mounted at one ends to the body frame 11; the second link 202 extending back and forth, having one end swingably connected to the other end of the first link 81 and the other end supporting the power unit 56; and the connecting rod 84 having one end supported by the body frame 11 and the other end supporting the power unit 56. The elastic member 107 is attached to the second link 202.

The vehicle-widthwise vibrations of the power unit 56 occur when the power unit 56 rolls right and left with respect to the straight line 63 extending back and forth and passing the output shaft 60a as an axle of the rear wheel 14 and the crankshaft 59A of the power unit 56. Therefore, the elastic member 107 is disposed on the second link 202 disposed at a position most remote from the above-mentioned straight line 63, in the link mechanism 55. Thus, the vehicle-widthwise vibrations of the power unit 56 can be absorbed efficiently.

As illustrated in Figs. 17 and 18, the power unit 217 includes the engine 227 provided with the crankshaft 225 and the axis 238 of the cylinder portion 232 provided in the engine 227 extends in the back and forth direction. The link 216 as a link mechanism is connected to the upper portion of the crankcase 231 supporting the cylinder portion 232.

The vehicle-widthwise vibrations of the power unit 217 occur when the power unit 217 rolls right and left with respect to the straight line 239 extending back and forth and passing the rear wheel 14 (see Fig. 1) and the crankshaft 225 of the power unit 217. The elastic member 107 is disposed on the link 216 connected to the upper portion of the crankcase 231 and disposed at a position remote from the above-mentioned straight line 239. Thus, the vehicle-widthwise vibrations of the power unit 217 can be absorbed efficiently.

As illustrated in Figs. 15 and 16, the elastic member 107 is provided vehicle-widthwise externally of the second link 202 as the link mechanism, specifically of the left link 203 of the second link 202. In addition, the elastic member 107 is attached in such a manner as to be able to come into contact with the body frame 11, specifically, with the inner lateral surface of the downward projecting portion 204a of the outer pivot plate 204. Therefore, the elastic member 107 comes into contact with the outer pivot plate 204 at a position remote from the vehicle-widthwise center. Thus, a vibration-absorbing effect can be enhanced.

Incidentally, in embodiment 1, the elastic member 107 is provided on the left external lateral surface 84g of the connecting rod 84 as illustrated in Fig. 11. However, the present invention is not limited to this. The elastic member 107 may be provided on a right external lateral surface of the connecting rod 84 and brought into contact with the inner plate portion 31D of the inner pivot plate 31b in a compressed manner. Alternatively, the elastic members 107 are provided on both the left and right external lateral surfaces of the connecting rod 84 so as to be brought into contact with the outer plate portion 31E and the inner plate portion 31D of the inner pivot plate 31b.

Similarly, in embodiment 2, the elastic member 107 is provided on the left arm 202 of the second link 201 as illustrated in Fig. 15. However, the invention is not limited to this. The elastic member 107 may be provided on the right arm (corresponding to the right arm 176 illustrated in Fig. 10) of the second link 201 and brought into contact with the right pivot plate (corresponding to the pivot plate 32 illustrated in Fig. 2). Further, the elastic members 107 may be provided on the left and right arms of the second link 201.

Further, in embodiment 3, the elastic member 107 is provided on the left lateral surface of the link main body 240 illustrated in Figs. 18(a) to (c). The elastic member 107 may be provided on the right lateral surface of the link main body 240 or on both the left and right lateral surfaces of the link main body 240.

Further, in embodiments 1 to 3, the gap is provided between the elastic member 107 and the body frame side. However, the present invention is not limited to this. In the state where the power unit does not vibrate, the elastic member 107 may be brought into vehicle-widthwise contact with the body frame side.

### Industrial Applicability

The suspension device for swing-type power unit of the present invention is suitable for motorcycles.

## Claims

1. A suspension device for a swing-type power unit, comprising:
a body frame (11);
a power unit (56) applying a drive force to a rear wheel (14) ;
a link mechanism (55) allowing the body frame (11) to support a front portion of the power unit (56) swingably back and forth and up and down; and
a damper (58) allowing the body frame (11) to suspend a rear portion of the power unit (56);
wherein a body-side to-be-supported portion provided on the link mechanism (55) to allow the body frame (11) to support the link mechanism (55) is elastically supported,
wherein the link mechanism (55) includes a first link (81) extending up and down and swingably mounted at one end to the body frame (11); a second link (82) extending back and forth, and having one end swingably connected to the other end of the first link (81) and the other end supporting the power unit (56); and
a forged connecting rod (84) having one end supported by the body frame (11) and the other end supporting the power unit (56),
**characterized in that** an elastic member (107) is attached to the forged connecting rod (84) in such a manner as to be able to come into vehicle-widthwise contact with the body frame (11).

2. A suspension device for a swing-type power unit, comprising:
a body frame (11);
a power unit (56) applying a drive force to a rear wheel (14);
a link mechanism (55) owing the body frame (11) to support a front portion of the power unit (56) swingably back and forth and up and down; and
a damper (58) allowing the body frame (11) to suspend a rear portion of the power unit (56);
wherein a body-side to-be-supported portion provided on the link mechanism (55) to allow the body frame (11) to support the link mechanism (55) is elastically supported,
wherein the link mechanism (55) includes a first link (81) extending up and down and swingably mounted at one end to the body frame (11); a second link (202) extending back and forth, and having one end swingably connected to the other end of the first link (81) and the other end supporting the power unit (56); and a connecting rod (84) having one end supported by the body frame (11) and the other end supporting the power unit (56),
**characterized in that** an elastic member (107) is attached to the second link (202) in such a manner as to be able to come into vehicle-widthwise contact with the body frame (11).

3. The suspension device for a swing-type power unit according to claim 1 o 2,
**characterized in that** the elastic member (107) is provided vehicle-widthwise externally of the link mechanism (55) and is attached in such a manner as to be able to come into contact with an inner lateral surface of the body frame (11).

## Patentansprüche

1. Aufhängungseinrichtung für eine Antriebseinheit vom Schwenktyp, umfassend:
einen Körperrahmen (11);
eine Antriebseinheit (56), welche ein Hinterrad (14) mit einer Antriebskraft beaufschlagt;
einen Verbindungsmechanismus (55), welcher es dem Körperrahmen (11) erlaubt, einen vorderen Abschnitt von der Antriebseinheit (56) vor und zurück und auf und ab schwenkbar zu lagern; und
einen Dämpfer (58), welcher es dem Körperrahmen (11) erlaubt, einen hinteren Abschnitt von der Antriebseinheit (56) aufzuhängen;
wobei ein Körper-seitiger abzustützender Abschnitt, welcher an dem Verbindungsmechanismus (55) vorgesehen ist, um zu erlauben, dass der Körperrahmen (11) den Verbindungsmechanismus (55) abstützt, elastisch abgestützt ist,
wobei der Verbindungsmechanismus (55) ein erstes Verbindungsglied (81) umfasst, welches sich auf und ab erstreckt und an einem Ende schwenkbar an dem Körperrahmen (11) angebracht ist; ein zweites Verbindungsglied (82) umfasst, welches sich vor und zurück erstreckt und ein Ende hat, welches mit dem anderen Ende von dem ersten Verbindungsglied (81) schwenkbar verbunden ist, und das andere Ende die Antriebseinheit (56) abstützt; und
eine geschmiedete Verbindungstange (84), welche ein Ende hat, welches von dem Körperrahmen (11) abgestützt ist, und wobei das andere Ende die Antriebseinheit (56) abstützt,
**dadurch gekennzeichnet, dass** ein elastisches Element (107) an der geschmiedeten Verbindungsstange (84) in einer derartigen Weise angebracht ist, dass es in einen Fahrzeugbreitenkontakt mit dem Körperrahmen (11) kommen kann.

2. Aufhängungseinrichtung für eine Antriebseinheit vom Schwenktyp, umfassend:
einen Körperrahmen (11);
eine Antriebseinheit (56), welche ein Hinterrad (14) mit einer Antriebskraft beaufschlagt;
einen Verbindungsmechanismus (55), welcher es dem Körperrahmen (11) erlaubt, einen vorderen Abschnitt von der Antriebseinheit (56) vor und zurück und auf und ab schwenkbar zu lagern; und
einen Dämpfer (58), welcher es dem Körperrahmen (11) erlaubt, einen hinteren Abschnitt von der Antriebseinheit (56) aufzuhängen;
wobei ein Körper-seitiger abzustützender Abschnitt, welcher an dem Verbindungsmechanismus (55) vorgesehen ist, um zu erlauben, dass der Körperrahmen (11) den Verbindungsmechanismus (55) abstützt, elastisch abgestützt ist,
wobei der Verbindungsmechanismus (55) ein erstes Verbindungsglied (81) umfasst, welches sich auf und ab erstreckt und an einem Ende schwenkbar an dem Körperrahmen (11) angebracht ist; ein zweites Verbindungsglied (202) umfasst, welches sich vor und zurück erstreckt und ein Ende hat, welches mit dem anderen Ende von dem ersten Verbindungsglied (81) schwenkbar verbunden ist, und das andere Ende die Antriebseinheit (56) abstützt; und
eine Verbindungstange (84), welche ein Ende hat, welches von dem Körperrahmen (11) abgestützt ist, und wobei das andere Ende die Antriebseinheit (56) abstützt,
**dadurch gekennzeichnet, dass** ein elastisches Element (107) an dem zweiten Verbindungsglied (202) in einer derartigen Weise angebracht ist, dass es in einen Fahrzeugbreitenkontakt mit dem Körperrahmen (11) kommen kann.

3. Aufhängungseinrichtung für eine Antriebseinheit vom Schwenktyp nach Anspruch 1 oder 2,
**dadurch gekennzeichnet, dass** das elastische Element (107) in der Fahrzeugbreite auswärts von dem Verbindungsmechanismus (55) vorgesehen ist und derart angebracht ist, dass es in der Lage ist, mit einer inneren lateralen Fläche von dem Körperrahmen (11) in Kontakt zu kommen.

## Revendications

1. Dispositif de suspension pour une unité d'entraînement de type oscillant, comprenant :
une ossature de caisse (11) ;
une unité d'entraînement (56) appliquant une force d'entraînement à une roue arrière (14) ;
un mécanisme d'articulation (55) permettant à l'ossature de caisse (11) de supporter une partie avant de l'unité d'entraînement (56) en oscillation d'arrière en avant et de haut en bas ; et
un amortisseur (58) permettant à l'ossature de caisse (11) de suspendre une partie arrière de l'unité d'entraînement (56) ;
dans lequel une partie à supporter côté caisse disposée sur le mécanisme d'articulation (55) pour permettre à l'ossature de caisse (11) de supporter le mécanisme d'articulation (55) est supportée élastiquement,
dans lequel le mécanisme d'articulation comprend une première articulaticn (81) s'étendant de haut en bas et étant montée en oscillation au niveau d'une extrémité de l'ossature de caisse (11) ; une seconde articulation (82) s'étendant d'arrière en avant, et ayant une extrémité raccordée en oscillation à l'autre extrémité de la première articulation (81) et l'autre extrémité supportant l'unité d'entraînement (56) ; et
une bielle forgée (84) ayant une extrémité supportée par l'ossature de caisse (11) et l'autre extrémité supportant l'unité d'alimentation (56),
**caractérisé en ce qu'**un organe élastique (107) est fixé à la bielle forgée (84) de manière à pouvoir venir en contact dans le sens de la largeur du véhicule avec l'ossature de caisse (11).

2. Dispositif de suspension pour une unité d'entraînement de type oscillant, comprenant :
une ossature de caisse (11) ;
une unité d'entraînement (56) appliquant une force d'entraînement à une roue arrière (14) ;
un mécanisme d'articulation (55) permettant à l'ossature de caisse (11) de supporter une partie avant de l'unité d'entraînement (56) en oscillation d'arrière en avant et de haut en bas ; et
un amortisseur (58) permettant à l'ossature de caisse (11) de suspendre une partie arrière de l'unité d'alimentation (56) ;
dans lequel une partie à supporter côté caisse disposée sur le mécanisme d'articulation (55) pour permettre à l'ossature de caisse (11) de supporter le mécanisme d'articulation (55) est supportée élastiquement,
dans lequel le mécanisme d'articulation (55) comprend une première articulation (81) s'étendant de haut en bas et étant montée en oscillation au niveau d'une extrémité à l'ossature de caisse (11) ; une seconde articulation (202) s'étendant d'arrière en avant, et ayant une extrémité raccordée en oscillation à l'autre extrémité de la première articulation (81) et l'autre extrémité supportant l'unité d'entraînement (56) ; et une bielle (84) ayant une extrémité supportée par l'ossature de caisse (11) et l'autre extrémité supportant l'unité d'entraînement (56),
**caractérisé en ce qu'**un organe élastique (107) est fixé à la seconde articulation (202) de manière à pouvoir venir en contact dans le sens de la largeur du véhicule avec l'ossature de caisse (11).

3. Dispositif de suspension pour une unité d'alimentation de type oscillant selon la revendication 1 ou 2,
**caractérisé en ce que** l'organe élastique (107) est disposé dans le sens de la largeur du véhicule de façon externe au mécanisme d'articulation (55) et est fixé de manière à pouvoir venir en contact avec une surface latérale interne de l'ossature de caisse (11).
